(19) **Europäisches Patentamt**

**European Patent Office**

**Office européen des brevets**

(11) **EP 1 279 943 B1**

(12) **EUROPÄISCHE PATENTSCHRIFT**

(45) Veröffentlichungstag und Bekanntmachung des Hinweises auf die Patenterteilung:
**30.11.2005 Patentblatt 2005/48**

(51) Int Cl.7: **G01M 17/02**

(21) Anmeldenummer: **02015246.8**

(22) Anmeldetag: **09.07.2002**

(54) **Regelverfahren für einen Räderprüfstand und Räderprüfstand**

Control method for a wheel test bench and wheel test bench

Procédé de réglage d'un banc d'essai de roue et banc d'essai de roue

(84) Benannte Vertragsstaaten:
**DE FR IT**

(30) Priorität: **24.07.2001 DE 10135920**

(43) Veröffentlichungstag der Anmeldung:
**29.01.2003 Patentblatt 2003/05**

(73) Patentinhaber: **Hayes Lemmerz Holding GmbH**
**53639 Königswinter (DE)**

(72) Erfinder: **Schwendemann, Heinz, Dr.**
**53225 Bonn (DE)**

(74) Vertreter: **Althaus, Arndt**
**Patentanwälte,**
**Buschhoff Hennicke Althaus**
**Postfach 19 04 08**
**50501 Köln (DE)**

(56) Entgegenhaltungen:
**EP-B- 0 731 336        DE-C2- 19 758 241**

- **ASCHMONEIT E-K: "LABORFAHRTEN ALS BELASTUNGSTEST VON AUTORADSYSTEMEN" TECHNISCHE RUNDSCHAU, HALLWAG VERLAG. BERN, CH, Bd. 80, Nr. 45, 4. November 1988 (1988-11-04), Seiten 46-47,49, XP000021167 ISSN: 1023-0823**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Regelverfahren für einen Prüfstand zur Prüfung von Fahrzeugrädern, Reifen, Radnaben, Radlagern und Radschrauben unter betriebsähnlichen Belastungsbedingungen sowie den Räderprüfstand selbst.

Gattungsgemäße Räderprüfstände, an denen Regelverfahren zur Prüfung der Fahrzeugräder und deren Teile unter betriebsähnlichen Belastungsbedingungen angewandt werden, werden von nahezu sämtlichen Räderherstellern, einigen Forschungsgesellschaften und auch Automobilherstellern eingesetzt. Ein gattungsgemäßer zweiaxialer Räderprüfstand ist aus der DE 197 58 241 C2 bekannt und umfaßt folgende Komponenten:

a) Eine einen C-förmigen oder winkelförmigen, schwenkbaren Belastungsbügel mit Horizontalbalken und Vertikalbalken aufweisende Halterungseinrichtung zum drehbaren Befestigen eines Fahrzeugrades und zum Verschwenken desselben in unterschiedliche Sturzwinkel;

b) eine Trommel, mit deren innerer Umfangsfläche ein auf dem Fahrzeugrad montierter Reifen in Rolleingriff bringbar ist;

c) eine Einrichtung zum Drehen der Trommel;

d) eine Axialbelastungseinrichtung zum Aufbringen einer in Axialrichtung des Fahrzeugrades wirkenden Axialkraft, wobei die Axialbelastungseinrichtung gelenkig mit der Halterungseinrichtung verbunden ist;

e) eine Radialbelastungseinrichtung zum Aufbringen einer in Radialrichtung des Fahrzeugrades wirkenden Radialkraft, wobei die Radialbelastungseinrichtung gelenkig mit der Halterungseinrichtung verbunden ist und vorzugsweise eine Schwenkachse für den Haltebügel der Halterungseinrichtung aufweist;

f) wenigstens einen auf der inneren Umfangsfläche der Trommel angeordneten Anlaufring; und

g) eine Stelleinrichtung für den Sturzwinkel.

Bei dem gattungsgemäßen Prüfstand ist die Halterungseinrichtung verschieblich gelagert, so daß sich das Fahrzeugrad zur selbsttätigen Sturzverstellung um den Radaufstandspunkt verschwenken kann. Die Einstellung für den Sturzwinkel besteht aus einer Voreinstellungs-Stellvorrichtung, mit der ausschließlich der maximale Sturz des Fahrzeugrades voreingestellt werden kann, mithin auf einen vorbestimmten, maximalen Wert begrenzt werden kann; kleinere Sturzwinkel als dieser maximale Sturzwinkel stellen sich dann automatisch, d.h. selbsttätig, aufgrund des Verhältnisses zwischen aufgebrachter Axial- und Radialkraft ein. Im laufenden Test ist eine Einflußnahme auf den Sturzwinkel nicht möglich. Konkret handelt es sich bei der Stellvorrichtung um eine Arretierungsvorrichtung, mit der die wirksame Länge eines die Verbindung zwischen Axialbelastungseinrichtung und Horizontalbalken des Belastungsbügels bewirkende Vertikalstrebe verändert wird, so daß sich aufgrund der veränderten Hebelverhältnisse das über das Axialbelastungseinrichtung auf das Fahrzeugrad aufgebrachte Moment ändert. Für eine Reihe vorgegebener, möglicher Sturzvoreinstellungen wurden beim gattungsgemäßen Prüfstand Kennlinien ermittelt, nach denen die Ansteuerparameter an der Radialbelastungseinrichtung und der Axialbelastungseinrichtung geregelt werden. Zur Überprüfung, ob die sich am Fahrzeugrad im Betrieb einstellenden Belastungsbedingungen mit den über die Kennlinien ermittelbaren Werte übereinstimmen, werden mittels Dehnungsmeßstreifen Messungen in charakteristischen Radpartien des Fahrzeugrades und der Nabe durchgeführt. Sofern die im Prüfstand gemessenen Meßwerte mit den aus einem Fahrversuch für das jeweilige Fahrzeugrad bekannten Meßwerten übereinstimmen, kann das in einer Auswerte- und Regeleinheit gespeicherte Belastungsprogramm bzw. Belastungsprotokoll unter Berücksichtigung der Kennlinie ablaufen. Es müssen daher weiterhin vorab aufwendige Vergleichsmessungen in den charakteristischen Radpartien durchgeführt werden, um im Prüfstandsbetrieb eine Übereinstimmung der sich einstellenden Dehnungs- und Spannungsverläufe in den charakteristischen Radpartien mit den Werten aus dem Fahrversuch verifizieren zu können. Auf die vorherige Bestimmung der Dehnungsverläufe in den charakteristischen Radpartien mittels Messungen kann daher nicht verzichtet werden.

Aufgabe der vorliegenden Erfindung ist es, ein Regelverfahren und einen hierfür geeigneten Räderprüfstand vorzuschlagen, der ohne vorherige aufwendige Messungen der Dehnungs- und Spannungsverläufe in charakteristischen Radpartien eine Einstellung der Ansteuerparameter für die Belastungseinrichtungen des Räderprüfstandes ermöglicht.

Diese Aufgabe wird in ihrem verfahrensmäßigen Aspekt dadurch gelöst, daß mittels der Regel- und Auswerteeinheit, mit der ohnehin die über die Axial- und Radialbelastungseinrichtung aufbringbaren Axial- und Radialkräfte eingestellt werden, die Sturzwinkeleinstellung im Betrieb mittels einer ansteuerbaren Sturzwinkelstelleinrichtung verändert wird, wobei die Stellwerte, mithin Ansteuerparameter, für die Axial- und Radialbelastungseinrichtung und die Sturzwinkelstelleinrichtung unter der Maßgabe geregelt werden, daß die aus einem Fahrversuch bekannte, aus Radaufstands- und Radseitenkraft gebildete Soll-Kraftresultierende nach Betrag, Richtung und Position ihrer Wirkungslinie mit der am Prüfstand sich einstellenden Ist-Kraftresultierenden übereinstimmt.

Die Radaufstandskraft und die Radseitenkraft können auf einfache Weise im Fahrversuch mit speziellen, radgeometrieunabhängigen Meßnaben gemessen werden; sie stellen radspezifische Größen dar, die von der Felgengröße, dem Reifen, dem Fahrzeug und der Teststrecke abhängig sind. Die Anmelderin hat nun verifiziert, daß die Beanspruchung eines Fahrzeugrades im Räderprüfstand mit den Beanspruchungen des Fahrzeugrades im realen Fahrversuch identisch ist, wenn die Kraftresultierende (Soll) aus Radaufstandskraft und Radseitenkraft beim Kontakt des Reifens mit der Fahrbahn mit der Kraftresultierenden (Ist) im Räderprüfstand nach Betrag, Richtung und Position identisch ist bzw. weitestgehend übereinstimmt. Die Verifizierung dieser Regelbedingung und die Anwendung dieser Regelbedingung bei einem Regelverfahren an Räderprüfständen zur Festlegung der Ansteuerparameter führt mithin zu einer Optimierung der am Prüfstand durchführbaren Simulationen bei erheblicher Kosten- und Zeitreduzierung für die Ermittlung der radspezifischen Daten.

In bevorzugter Ausgestaltung des erfindungsgemäßen Regelverfahrens wird mittels am Belastungsbügel geeignet angeordneter Meßeinrichtungen der Biegemomentverlauf im Belastungsbügel gemessen, durch Extrapolation aus den gemessenen Werten die momentane Position der Wirkungslinie der sich einstellenden Ist-Kraftresultierenden und deren Radial- und Axialkraftkomponente ermittelt und dann durch Veränderung der Stellwerte bzw. Ansteuerparameter die Übereinstimmung mit den aus dem Fahrversuch bekannten Größen für die Soll-Kraftresultierende erreicht. Das Messen des Biegemomentenverlaufes und die anschließende Extrapolation des Momentenverlaufes im Belastungsbügel sorgen mithin durch im Prüfstand intern ermittelte Werte dafür, daß die Position der Wirkungslinie der Ist-Kraftresultierenden festgestellt und als Stell- bzw. Regelgröße im Regelverfahren verwendet werden kann. In bevorzugter Ausgestaltung wird hierbei die Wirkungslinie über das Momentengleichgewicht im Belastungsbügel bestimmt. Besonders günstig ist dann, wenn die Sturzwinkelstelleinrichtung mit einem Hydraulikzylinder bewirkt wird, mit der der Sturzwinkel verstellt und auf einen Sollwert geregelt wird, bis die Regelbedingung erfüllt ist.

Hinsichtlich des vorrichtungsmäßigen Aspektes wird die weiter oben genannte Aufgabe durch einen Prüfstand gelöst, bei dem erfindungsgemäß die Sturzwinkelstelleinrichtung im Betrieb ansteuerbar ist und am Belastungsbügel Meßeinrichtungen zur Messung des Biegemomentenverlaufs angeordnet sind, um durch Extrapolation des Biegemomentenverlaufes im Belastungsbügel die Stellwerte für die Radialbelastungseinrichtung, Axialbelastungseinrichtung und Sturzwinkelstelleinrichtung unter der Maßgabe regeln zu können, daß die aus einem Fahrversuch bekannte Soll-Kraftresultierende, gebildet aus Radseitenkraft und Radaufstandskraft, nach Betrag, Richtung und Position ihrer Wirkungslinie mit der sich am Prüfstand einstellenden Ist-Kraftresultierenden im wesentlichen übereinstimmt oder identisch ist.

Die bei den Fahrzeugradherstellern und Automobilherstellern vorhandenen Prüfstände lassen sich auf besonders einfache und kostengünstige Weise für die Durchführung des erfindungsgemäßen Regelverfahrens nachrüsten, wenn am Horizontalbalken zwei im Abstand zueinander angeordnete Meßeinrichtungen für die Biegemomente im Horizontalbalken und am Vertikalbalken zwei im Abstand zueinander angeordnete Meßeinrichtungen angeordnet werden und die Meßpunkte der Meßeinrichtungen am Horizontalbalken derart gewählt sind, daß sich die Meßpunkte zwischen der Schwenkachse des Belastungsbügels und dem Vertikalbalken befinden, so daß mit geringem rechnerischen Aufwand, wie weiter unten noch dargelegt werden wird, aus den gemessen Biegemomentwerten und den Koordinaten der Meßpunkte durch Extrapolation die Schnittpunkte mit der neutralen Faser des Belastungsbügels bestimmt werden können, bei denen das Moment jeweils Null ist. Beide Schnittpunkte fallen mit der Wirkungslinie der Ist-Kraftresultierenden zusammen, so daß die Wirkungslinie der Ist-Kraftresultierenden bekannt ist und zur Prüfstandsregelung herangezogen werden kann. Zweckmäßigerweise bestehen die Meßeinrichtungen aus Dehnungsmeßstreifen (DMS), wobei vorzugsweise für jeden Meßpunkt ein Dehnungsmeßstreifen an der Oberseite und ein Dehnungsmeßstreifen an der Unterseite des Horizontalbalkens und Vertikalbalkens des Belastungsbügels angeordnet ist. Die Dehnungsmeßstreifen können dann in Vollbrücke verschaltet sein, so daß die Schaltung auch eine Kompensation - wie an sich bekannt - erlaubt.

Die gattungsgemäßen Prüfstände der bevorzugten Konstruktion weisen an der Axialbelastungseinrichtung einen Anschlußkopf auf, der gelenkig über eine Gelenkstange an einer starr mit dem Horizontalbalken verbundenen Vertikalstrebe angeschlossen ist. Bei den gattungsgemäßen Prüfständen ist allerdings zur Zeit zwischen dem Anschlußkopf und der Vertikalstrebe ein Dämpfer angeordnet. Um nun Prüfstände mit dem entsprechenden Aufbau für die Durchführung des erfindungsgemäßen Regelverfahrens anzupassen, wird vorzugsweise die Sturzwinkelstelleinrichtung gelenkig zwischen Anschlußkopf und Vertikalstrebe angeordnet und ersetzt den bei den gattungsgemäßen Prüfständen vorhandenen Dämpfer. In bevorzugter Ausgestaltung handelt es sich bei der Sturzwinkelstelleinrichtung um einen Hydraulikzylinder. Alternativ kann die Sturzwinkelstelleinrichtung jedoch auch mechanisch, elektrisch oder pneumatisch verstellt werden, so daß der Sturzwinkel weggeregelt oder kraftgeregelt eingestellt wird.

Die Erfindung wird nun unter Bezugnahme auf ein in der Zeichnung dargestelltes Ausführungsbeispiel näher erläutert. In der Zeichnung zeigen:

**Fig. 1** schematisch, teilweise im Schnitt, den Aufbau eines erfindungsgemäßen zweiaxialen Räderprüfstandes in bevorzugter Konstruktion; und

**Fig. 2** schematisch in einem Schaubild die zur Bestim- mung der Ist-Kraftresultierenden verwendeten Meßwerte und geometrischen Verhältnisse.

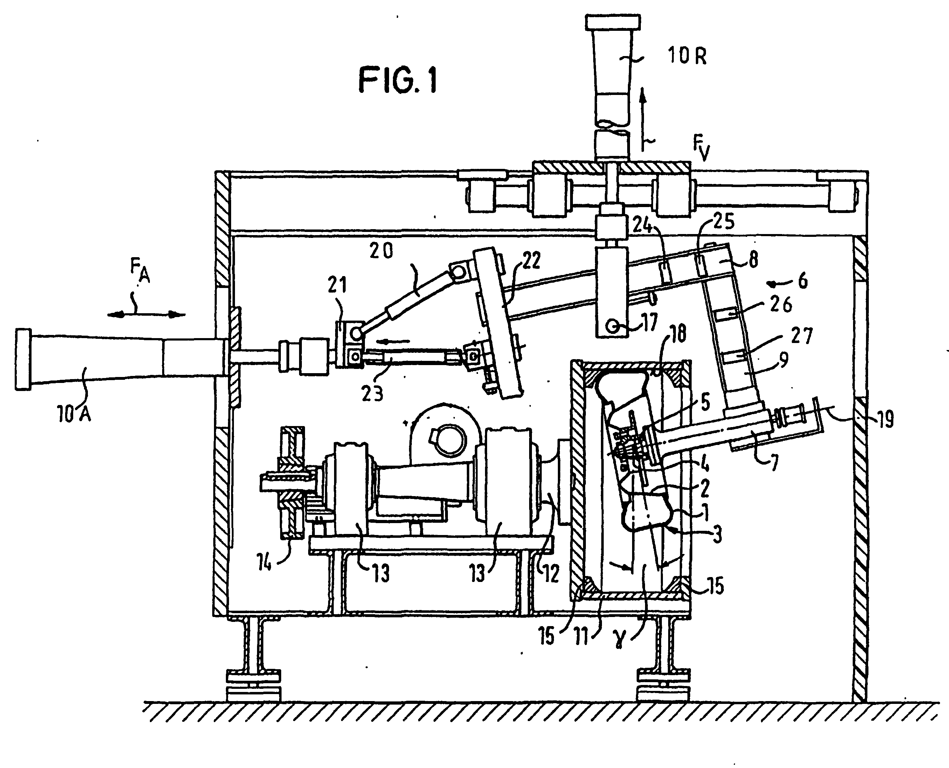

Fig. 1 zeigt einen zweiaxialen Räderprüfstand zur Prüfung von Fahrzeugrädern, Reifen, Radnaben, Radlagern und Radschrauben unter betriebsähnlichen Belastungsbedingungen gemäß einer bevorzugten Konstruktion. Ein Reifen 1 ist auf der Felge 2 eines aus Radfelge und Radschüssel bestehenden Fahrzeugrades 3 montiert und zusammen mit Radnabe 4 und Radlager 5 eines Originalfahrzeugs oder einer Versuchsnabe an einem Achszapfen 7 montiert. Das Fahrzeugrad 3 kann sich gegenüber dem Achszapfen 7 und den weiteren Bestandteilen des Räderprüfstandes frei drehen. Der Achszapfen 7 ist an einer insgesamt mit 6 bezeichneten, C-förmigen bzw. winkelförmigen Halterungseinrichtung 6 befestigt, die einen aus Horizontalbalken 8 und Vertikalbalken 9 gebildeten Belastungsbügel umfaßt. Am Vertikalbalken 9 ist der Achszapfen 7 parallel zum Horizontalbalken 8 starr befestigt. Über den Belastungsbügel der Halterungseinrichtung 6, den Achszapfen 7, Radlager 5 und die Radnabe 4 werden eine Radialkraft und eine Axialkraft in die Radschüssel des Fahrzeugrades 3 eingeleitet, um im Prüfstand durch Simulation z.B. die Betriebsfestigkeit eines bestimmten Fahrzeugrades prüfen zu können. Zum Aufbringen der in Radialrichtung wirkenden Radialkraft $F_V$ ist eine Radialbelastungseinrichtung 10R vorgesehen, die vorzugsweise von einem servohydraulischen Zylinder gebildet wird. Die Ansteuerung der Radialbelastungseinrichtung 10R erfolgt über eine nicht gezeigte Auswerte-, Regel- und Steuereinheit und die Radialkraft $F_V$ wird in die Halterungseinrichtung 6 und hierüber in das Fahrzeugrad 3 eingeleitet. Zum Aufbringen einer Kraftkomponente in Axialrichtung des Fahrzeugrades 3, d.h. parallel zu seiner Radachse 19, dient eine Axialbelastungseinrichtung 10A, die wiederum von einem servohydraulischen Zylinder gebildet wird. Mit der Axialbelastungseinrichtung 10A wird entsprechend, wie mit dem Doppelpfeil dargestellt, eine Axialkraft $F_A$ in die Halterungseinrichtung 6 und hierüber in das Fahrzeugrad 3 eingeleitet. Um betriebsähnliche Belastungsbedingungen zu simulieren, befindet sich das Fahrzeugrad 3 mit dem montierten Reifen 1 in Rolleingriff mit dem Innenumfang 18 einer Trommel 11. Die Trommel 11 wird über die Antriebswelle 12, die in Lagerböcken 13 gelagert ist, und eine hier als Keilriemenantrieb 14 gezeigte Antriebseinrichtung angetrieben. Die Trommel 11 umfaßt Anlaufringe 15 mit abgeschrägten Seitenflächen, deren Abstand verstellt werden kann, um die Trommelbreite an unterschiedliche Reifenbreiten des Reifens 1 anpassen zu können.

Der Räderprüfstand weist zudem erfindungsgemäß eine hier von einem Hydraulikzylinder gebildete Sturzwinkelstelleinrichtung 20 auf, die mit der nicht dargestellten Auswerte-, Regel- und Steuereinheit zur Regelung des Sturzwinkels γ angesteuert werden kann. Die Sturzwinkelstelleinrichtung 20 ist nach Art eines Lenkers zwischen einem Anschlußkopf 21 der Axialbelastungseinrichtung 10A und einer Vertikalstrebe 22, die starr mit dem Horizontalbalken 8 verbunden ist, gelenkig befestigt. Zwischen dem Anschlußkopf 21 und der Vertikalstrebe 22 ist zudem eine Gelenkstange 23 angelenkt, die im wesentlichen horizontal liegt und deren Ausrichtung, entsprechend der Krafteinleitungslinie der Horizontalbelastungseinrichtung 10A, mit der Innenumfangsfläche 18 auf Höhe des Rolleingriffs zwischen Reifen 1 und Trommel 11 zusammenfällt. Die Gelenkpunkte der Gelenkstange 23 und der Sturzwinkelstelleinrichtung 20 liegen bei einem Sturzwinkel γ von Null in derselben Vertikalebene. Für die mit der Sturzwinkelstelleinrichtung 20 bewirkbare Einstellung und Regelung des Sturzwinkels γ ist der Belastungsbügel der Halterungseinrichtung 6 um den Schwenkzapfen 17 schwenkbar, der hier genau auf der Wirkungslinie der Radialbelastungseinrichtung 10R liegt und Bestandteil von dessen Übertragungsgestänge ist. Zur Durchführung des erfindungsgemäßen Regelverfahrens sind ferner einerseits am Horizontalbalken 8 des Belastungsbügels der Halterungseinrichtung 6 zwei DMS-Meßeinrichtungen 24, 25 zur Messung der Biegemomente im Abstand zueinander angeordnet und andererseits am Vertikalbalken 9 zwei weitere DMS-Meßeinrichtungen 26, 27 zur Messung der Biegemomente im Abstand zueinander angeordnet. Sämtliche DMS-Meßeinrichtungen 24 bis 27 liegen in Fig. 1 rechts vom Schwenkzapfen 17 und sind mit einer gebräuchlichen Vollbrückenverschaltung zur Momentenmessung an der Ober- und Unterseite des Horizontalbalkens 8 und des Vertikalbalkens 9 versehen. Die Meßwerte der Meßeinrichtungen 24 bis 27 werden der Regel- und Auswerteeinheit zugeführt.

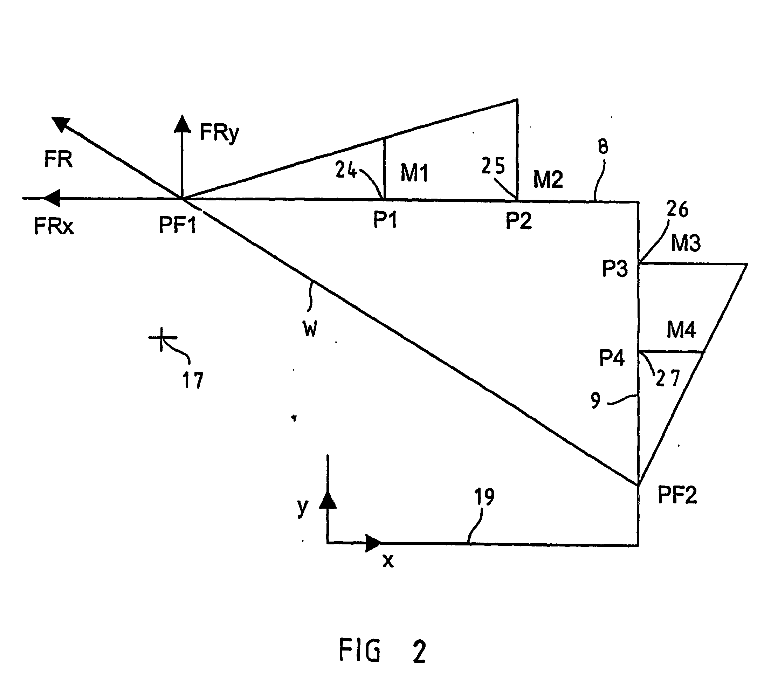

Die Umsetzung des Regelverfahrens wird nun unter Bezugnahme auf das Schaubild in Fig. 2 erläutert. In Fig. 2 sind der Horizontalbalken 8 und der Vertikalbalken 9 zusammen mit den an diesen im Abstand zueinander angebrachten Meßeinrichtungen 24, 25, 26 und 27 dargestellt. Die Positionen der einzelnen Meßpunkte der Meßeinrichtungen 24 bis 27 sind mit den Bezugszeichen P1 bis P4 dargestellt, wobei für jeden Meßpunkt P1 bis P4 zur Messung der an diesem Punkt wirkenden Biegemomente M1, M2, M3, M4 im Horizontalbalken 8 oder Vertikalbalken 9 eine zugehörige, bekannte x-Koordinate und y-Koordinate gespeichert ist, so daß sich insgesamt für die Meßpunkte P1 bis P4 die Positionskoordinaten $P1_{X,Y}$; $P2_{X,Y}$; $P3_{X,Y}$ und $P4_{X,Y}$ ergeben. Der Nullpunkt des x,y-Koordinatensystems ist derart gewählt, daß die x-Achse mit der Radachse 19 zusammenfällt und die y-Achse senkrecht durch die Felgenmitte des Fahrzeugrades verläuft. Die sich im Räderprüfstand ergebende Ist-Kraftresultierende, d.h. die Kraft, die vom Reifen 1 auf die Innenumfangsfläche 18 der Trommel 11 (Fig. 1) übertragen wird, ist in Fig. 2 mit FR verdeutlicht. Für die Durchführung und Umsetzung des Regelverfahrens wird die Ist-Kraftresultierende in eine axiale Radseitenkraft $FR_X$ und eine radiale Radaufstandskraft $FR_Y$ zerlegt, wobei letztere immer hinsichtlich des gewählten Koordinatensystems positiv ist.

Wie eingangs dargelegt erfolgt die Regelung im Prüfstand unter Berücksichtigung der Position und Richtung der Wirkungslinie W der Ist-Kraftresultierenden. Die Wirkungslinie W schneidet die neutrale Faser des Vertikalbalkens 9 im Punkt PF2 und die neutrale Faser des Horizontalbalkens 8 im Punkt PF1. Der Schnittpunkt PF1 bzw. seine Koordinaten $PF1_X$ und $PF1_Y$ lassen sich durch graphische oder insbesondere rechnerische Extrapolation aus den gemessenen Biegemomenten M1 und M2 an den Meßpunkten P1 und P2 rechnerisch ermitteln mit

$$PF1_X = (M2 * P1_X - M1 * P2_X)\ (M2 - M1);$$

die Koordinate $PF1_y$ ist aus den geometrischen Prüfstandsverhältnissen bekannt und fällt mit $P1_y$ bzw. $P2_y$ zusammen. Gleichermaßen lassen sich die Koordinaten des Schnittpunktes PF2 mit der neutralen Faser des Vertikalbalkens 9 über die Gleichung

$$PF2_Y = (M4 * P3_Y - M3 * P4_Y)\ /\ (M4 - M3)$$

berechnen; $PF2_x$ entspricht $P1_x$ bzw. $P2_x$. Mit den dann gegebenen Koordinaten kann nun die Komponente der axialen Seitenkraft $FR_X$ parallel zur neutralen Phase des Horizontalbalkens 8 und die radiale Komponente $FR_Y$ parallel zur neutralen Faser des Vertikalbalkens 9 nach der Methode der Momentengleichgewichte berechnet werden zu:

$$FR_x = -\ M3\ /\ (PF2_y - P3_y)$$

$$Fr_y = M2\ /\ (PF1_x - P2_x)$$

Betrag, Richtung und Position der Wirkungslinie der Ist-Kraftresultierenden FR im Räderprüfstand sind dann bekannt.

Aus einem einfachen Fahrversuch ist für jede Fahrzeugrad / Reifen-Kombination die Radaufstandskraft und die Radseitenkraft und hierüber auch Betrag, Richtung und Position der Wirkungslinie der Kraftresultierenden für die zu simulierenden Belastungszustände vorgegeben. Da durch die Meßeinrichtungen die sich im Räderprüfstand einstellenden Werte der Ist-Kraftresultierenden bekannt sind und insbesondere Informationen über die Position der Wirkungslinie der Ist-Kraftresultierenden FR vorliegen, kann diese Position der Kraftresultierenden für die Regelung des Räderprüfstandes und die Anpassung der Werte an die aus dem Fahrversuch bekannten Werte verwendet werden. Die Regelung kann dabei insbesondere über den Sturzwinkel erfolgen, der mittels der Sturzwinkelstelleinrichtung auf einen Sollwert entsprechend dem Fahrversuch geregelt wird, so daß im Räderprüfstand die Einleitung der Betriebsbelastungen in einem genau definierten Radaufstandspunkt erfolgen. Die Ansteuerparameter für die Radialbelastungseinrichtung, Axialbelastungseinrichtung und Sturzwinkelstelleinrichtung werden iterativ verändert, bis die Regelbedingung erfüllt ist.

**Patentansprüche**

1.  Regelverfahren für einen Prüfstand zur Prüfung von Fahrzeugrädern (3), Reifen (1), Radnaben (4), Radlagern (5) oder Radschrauben unter betriebsähnlichen Belastungsbedingungen, umfassend

    a) eine einen C-förmigen oder winkelförmigen, schwenkbaren Belastungsbügel mit Horizontalbalken (8) und Vertikalbalken (9) aufweisende Halterungseinrichtung (6) zum drehbaren Befestigen eines Fahrzeugrades (3) und zum Verschwenken desselben in unterschiedliche Sturzwinkel,
    b) eine Trommel (11), mit deren innerer Umfangsfläche (18) ein auf dem Fahrzeugrad (3) montierter Reifen (1) in Rolleingriff bringbar ist;
    c) eine Einrichtung (12, 13, 14) zum Drehen der Trommel (11);
    d) eine Axialbelastungseinrichtung (10A) zum Aufbringen einer in Axialrichtung des Fahrzeugrades wirkenden Axialkraft, wobei die Axialbelastungseinrichtung (10A) gelenkig mit der Halterungseinrichtung (6) verbunden ist;
    e) eine Radialbelastungseinrichtung (10R) zum Aufbringen einer in Radialrichtung des Fahrzeugrades wirkenden Radialkraft, wobei die Radialbelastungseinrichtung (10R) gelenkig mit der Halterungseinrichtung (6) verbunden ist und vorzugsweise eine Schwenkachse (17) für den Haltebügel aufweist; und
    f) wenigstens einen auf der inneren Umfangsfläche (18) der Trommel (11) angeordneten Anlaufring (15);

    wobei mittels einer Regel- und Auswerteeinheit die über die Axial- und Radialbelastungseinrichtungen (10A; 10R) aufbringbaren Axial- und Radialkräfte eingestellt werden, **dadurch gekennzeichnet, daß** mittels der Regel- und Auswerteeinheit die Sturzwinkeleinstellung im Betrieb über eine ansteuerbare Sturzwinkel-Stelleinrichtung (20) verändert wird, wobei die Stellwerte für die Axialbelastungseinrichtung (10A), Radialbelastungseinrichtung (10R) und die Sturzwinkelstelleinrichtung (20) unter der Maßgabe geregelt werden, daß die aus einem Fahrversuch bekannte, aus Radaufstandskraft und Radseitenkraft gebildete Soll-Kraftresultierende nach Betrag, Richtung und Position ihrer Wirkungslinie mit der sich am Prüfstand einstellenden Ist-Kraftresultierenden im wesentlichen übereinstimmt oder identisch ist.

2. Regelverfahren nach Anspruch 1, **dadurch gekennzeichnet, daß** mittels am Belastungsbügel (6; 8) geeignet angeordneter Meßeinrichtungen (24, 25, 26, 27) der Biegemomentenverlauf im Belastungsbügel gemessen wird, durch Extrapolation aus den gemessenen Werten die momentane Position der Wirkungslinie der sich einstellenden Ist-Kraftresultierenden ermittelt wird und durch Veränderung der Stellwerte Übereinstimmung mit den aus dem Fahrversuch bekannten Größen für die Soll-Kraftresultierende erreicht wird.

3. Regelverfahren nach Anspruch 1 oder 2, **dadurch gekennzeichnet, daß** die Wirkungslinie über das Momentengleichgewicht im Belastungsbügel bestimmt wird.

4. Regelverfahren nach einem der Ansprüche 1 bis 3, **dadurch gekennzeichnet, daß** die Sturzwinkelstelleinrichtung aus einem Hydraulikzylinder (20) besteht, mit der der Sturzwinkel verstellt und auf einen Sollwert geregelt wird, bis die Regelbedingung erfüllt ist.

5. Prüfstand zur Prüfung von Fahrzeugrädern (3), Reifen (1), Radnaben (4), Radlagern (5) und Radschrauben unter betriebsähnlichen Belastungsbedingungen, umfassend

    a) eine einen C-förmigen oder winkelförmigen, schwenkbaren Belastungsbügel mit Horizontalbalken (8) und Vertikalbalken (9) aufweisende Halterungseinrichtung (6) zum drehbaren Befestigen eines Fahrzeugrades (3) und zum Verschwenken desselben in unterschiedliche Sturzwinkel,

    b) eine Trommel (11), mit deren inneren Umfangsfläche (18) ein auf dem Fahrzeugrad (3) montierter Reifen (1) in Rolleingriff bringbar ist;

    c) eine Einrichtung (12, 13, 14) zum Drehen der Trommel (11);

    d) eine Axialbelastungzeinrichtung (10A) zum Aufbringen einer in Axialrichtung des Fahrzeugrades wirkenden Axialkraft, wobei die Axialbelastungseinrichtung (10A) gelenkig mit der Halterungseinrichtung (6) verbunden ist;

    e) eine Radialbelastungseinrichtung (10R) zum Aufbringen einer in Radialrichtung des Fahrzeugrades wirkenden Radialkraft, wobei die Radialbelastungseinrichtung (10R) gelenkig mit der Halterungseinrichtung (6) verbunden ist und vorzugsweise eine Schwenkachse (17) für den Haltebügel aufweist; und

    f) wenigstens einen auf der inneren Umfangsfläche (18) der Trommel (11) angeordneten Anlaufring (15);

    **gekennzeichnet durch**

    g) eine Sturzwinkelstelleinrichtung, die im Betrieb ansteuerbar ist, und

    h) am Belastungsbügel (8, 9) angeordnete Meßeinrichtungen (24, 25, 26, 27) zur Messung des Biegemomentenverlaufs im Belastungsbügel, um **durch** Extrapolation des Biegemomentenverlaufs im Belastungsbügel die Stellwerte für die Radialbelastungseinrichtung (10R), Axialbelastungseinrichtung (10A) und Sturzwinkelstelleinrichtung (20) unter der Maßgabe regeln zu können, daß die aus einem Fahrversuch bekannte Soll-Kraftresultierende, gebildet aus Radaufstandskraft und Radseitenkraft, nach Betrag, Richtung und Position ihrer Wirkungslinie mit der sich am Prüfstand einstellenden Ist-Kraftresultierenden im wesentlichen übereinstimmt oder identisch ist.

6. Prüfstand nach Anspruch 5, **dadurch gekennzeichnet, daß** am Horizontalbalken (8) zwei im Abstand zueinander angeordnete Meßeinrichtungen (24, 25) und am Vertikalbalken (9) zwei im Abstand zueinander angeordnete Meßeinrichtungen (26, 27) angeordnet sind, wobei die Positionen der Meßeinrichtungen (24, 25) am Horizontalbalken (8) derart gewählt sind, daß sich die Meßpunkte zwischen der Schwenkachse (17) des Belastungebügels und dem Vertikalbalken (9) befinden.

7. Prüfstand nach Anspruch 5 oder 6, **dadurch gekennzeichnet, daß** die Meßeinrichtungen (24, 25, 26, 27) aus Dehnungsmeßstreifen bestehen, wobei vorzugsweise für jeden Meßpunkt ein Dehnungsmeßstreifen an der Oberseite und ein Dehnungsmeßstreifen an der Unterseite des Horizontalbalkens (8) und Vertikalbalkens (9) angeordnet ist.

8. Räderprüfstand nach einem der Ansprüche 5 bis 7, **dadurch gekennzeichnet, daß** die Axialbelastungseinrichtung (10A) einen Anschlußkopf (21) aufweist, der gelenkig über eine Gelenkstange (23) an einer starr mit dem Horizontalbalken (8) verbundene Vertikalstrebe (22) angeschlossen ist, und daß die Sturzwinkelstellenrichtung (20) gelenkig am Anschlußkopf (21) und an der Vertikalstrebe (22) angreift.

9. Prüfstand nach einem der Ansprüche 5 bis 8, **dadurch gekennzeichnet, daß** die Sturzwinkelstelleinrichtung aus einem Hydraulikzylinder (20) besteht.

## Claims

1. Control method for a test bench for the testing of vehicle wheels (3), tyres (1), wheel hubs (4), wheel bearings (5) or wheel bolts under loading conditions similar to those occurring under operational conditions, including

   a) a retention device exhibiting a C-shaped or angular, pivotable, loading frame with a horizontal beam (8) and a vertical beam (9) for the securing of a vehicle wheel (3) such that it can rotate, and for the pivoting of the same at a varying camber angle;
   b) a drum (11), with the inner circumferential surface (18) of which a tyre (1) mounted on a vehicle wheel (3) can be brought into rolling contact;
   c) a device (12, 13, 14) for the rotation of the drum (11);
   d) an axial loading device (10A) for the application of an axial force acting in the axial direction of the vehicle wheel; the axial loading device (10A) being connected with the retention device (6) in a jointed manner;
   e) a radial loading device (10R) for the application of a radial force acting in the radial direction of the vehicle wheel; the radial loading device (10R) being connected with the retention device (6) in a jointed manner and preferably exhibiting a pivot axis (17) for the holding frame; and
   f) at least one thrust ring (15) located on the inner circumferential surface (18) of the drum (11); where by means of a control and evaluation unit the axial and radial forces that can be applied via the axial and radial loading devices (10A, 10R) are adjusted, **characterised in that** by means of the control and evaluation unit the camber angle setting is modified during test bench operation by means of a controllable camber angle adjustment device (20), whereby the adjustment values for the axial loading device (10A), radial loading device (10R) and the camber angle adjustment device (20) are controlled with the requirement that the desired resultant force formed from wheel vertical force and wheel side force, established from a road trial, essentially agrees or is identical in magnitude, direction and position of its line of action with the self-adjusting actual resultant force on the test bench.

2. Control method in accordance with Claim 1, **characterised in that** by means of measurement devices (24, 25, 26, 27) suitably located on the loading frame (6, 8) the bending moment characteristic in the loading frame is measured; by means of extrapolation from the measured values the instantaneous position of the line of action of the self-adjusting actual resultant force is determined, and by modification of the adjustment values agreement with the parameters established from the road trial for the desired resultant force is achieved.

3. Control method in accordance with Claim 1 or 2, **characterised in that** the line of action is determined via the equilibrium of moments in the loading frame.

4. Control method in accordance with one of the Claims 1 to 3, **characterised in that** the camber angle adjustment device consists of a hydraulic ram (20), with which the camber angle is adjusted and controlled to a desired value, until the control condition is fulfilled.

5. Test bench for the testing of vehicle wheels (3), tyres (1), wheel hubs (4), wheel bearings (5) and wheel bolts under loading conditions similar to those occurring under operational conditions, including

   a) a retention device (6) exhibiting a C-shaped or angular, pivotable, loading frame with a horizontal beam (8) and a vertical beam (9) for the securing of a vehicle wheel (3) such that it can rotate, and for the pivoting of the same at a varying camber angle;
   b) a drum (11), with the inner circumferential surface (18) of which a tyre (1) mounted on a vehicle wheel (3) can be brought into rolling contact;
   c) a device (12, 13, 14) for the rotation of the drum (11);
   d) an axial loading device (10A) for the application of an axial force acting in the axial direction of the vehicle wheel; the axial loading device (10A) being connected with the retention device (6) in a jointed manner;
   e) a radial loading device (10R) for the application of a radial force acting in the radial direction of the vehicle wheel; the radial loading device (10R) being connected with the retention device (6) in a jointed manner and preferably exhibiting a pivot axis (17) for the holding frame; and
   f) at least one thrust ring (15) located on the inner circumferential surface (18) of the drum (11); and
   **characterised by**:
   g) a camber angle adjustment device, that can be controlled during test bench operation, and
   h) measurement devices (24, 25, 26, 27) located on the loading frame (8, 9) for the measurement of the bending moment characteristic in the loading frame, in order by means of extrapolation of the bending moment characteristic in the loading frame to be able to control the setting values for the radial loading device (10R), axial loading device (10A) and camber angle adjustment device (20), with the requirement that the desired resultant force, established from a road trial and formed from wheel vertical force and wheel side force, essentially agrees or is identical in magnitude, direction and position of its line of action with the self-adjusting actual resultant force on the test bench.

6. Test bench in accordance with Claim 5, **characterised in that** two measurement devices (24, 25) are located on the horizontal beam (8) with a separation between them, and two measurement devices (26, 27) are located on the vertical beam (9) with a separation between them, where the positions of the measurement devices (24, 25) on the horizontal beam (8) are selected such that the measurement points are located between the pivot axis (17) of the loading frame and the vertical beam (9).

7. Test bench in accordance with Claim 5 or 6, **characterised in that** the measurement devices (24, 25, 26, 27) consist of strain gauges, where preferably for each measurement point one strain gauge is located on the upper surface and one strain gauge on the lower surface of the horizontal beam (8) and vertical beam (9).

8. Test bench in accordance with one of the Claims 5 to 7, **characterised in that** the axial loading device (10A) exhibits a connecting head (21), which is connected in a jointed manner via a joint rod (23) to a vertical strut (22) that is rigidly connected with the horizontal beam (8), and **in that** the camber angle adjustment device (20) engages in a jointed manner with the connecting head (21) and the vertical strut (22).

9. Test bench in accordance with one of the Claims 5 to 8, **characterised in that** the camber angle adjustment device consists of a hydraulic ram (20).

## Revendications

1. Procédé de réglage d'un banc d'essai pour des essais sur des roues de véhicules (3), des pneus (1), des moyeux de roues (4), des paliers de roues (5) ou des vis de roues dans des conditions identiques, comprenant

a) un étrier de charge orientable en forme de C ou de forme angulaire avec un dispositif de fixation (6) comportant des barres horizontales (8) et des barres verticales (9) pour la fixation rotative d'une roue de véhicule (3) et pour le pivotement de cette dernière sous différents angles de piqué $\Upsilon$,

b) un tambour (11) avec la surface périphérique intérieure (18) duquel un pneu (1) monté sur la roue du véhicule (3) peut être amené en prise de roulement ;

c) un dispositif (12, 13, 14) de rotation du tambour (11) ;

d) un dispositif de charge axiale (10A) pour appliquer une force axiale FA agissant en direction axiale de la roue de véhicule, le dispositif de charge axiale (10A) étant relié de façon articulée avec le dispositif de fixation (6) ;

e) un dispositif de charge radiale (10R) pour appliquer une force radiale FR agissant en direction radiale de la roue de véhicule, le dispositif de charge radiale (10R) étant relié de façon articulée avec le dispositif de fixation (6) et comportant de préférence un axe de pivotement (17) pour l'étrier de maintien ; et

f) au moins une bague d'usure (15) disposée sur la surface périphérique intérieure (18) du tambour (11) ;

les forces axiales et radiales applicables par l'intermédiaire des dispositifs de charge axiale et radiale (10A ; 10R) étant réglées à l'aide d'une unité de réglage et d'évaluation, **caractérisé en ce qu'**on modifie le réglage de l'angle de piqué en cours d'exploitation par l'intermédiaire d'un dispositif de réglage activable de l'angle de piqué (20), au moyen de l'unité de réglage et d'évaluation, les valeurs de réglage pour le dispositif de charge axiale (10A), le dispositif de charge radiale (10R) et le dispositif de réglage de l'angle de piqué (20) étant réglées selon le critère que la résultante de force de consigne connue grâce à un essai du véhicule, composée de la force de contact de la roue et de la force latérale de la roue concorde sensiblement ou soit identique au niveau du montant, de la direction et de la position de sa ligne d'action W avec la résultante de force réelle qui s'établit sur le banc d'essai.

2. Procédé de réglage selon la revendication 1, **caractérisé en ce qu'**au moyen de dispositifs de réglage (24, 25, 26, 27) disposés de façon adaptée sur l'étrier de charge (6 ; 8), on mesure la courbe du couple de flexion dans l'étrier de charge, on détermine par extrapolation des valeurs mesurées la position actuelle de la ligne d'action de la résultante de force qui s'établit et par modification des valeurs de réglage, on obtient une concordance avec des dimensions de la résultante de force connues grâce à l'essai du véhicule.

3. Procédé de réglage selon la revendication 1 ou 2, **caractérisé en ce qu'**on détermine la ligne d'action par l'intermédiaire de l'équilibre des moments dans l'étrier de charge.

4. Procédé de réglage selon l'une quelconque des revendications 1 à 3, **caractérisé en ce que** le dispositif de réglage de l'angle de piqué est un vérin hydraulique (20) permettant d'ajuster l'angle de piqué et de le régler à une valeur de consigne, jusqu'à ce que la condition de réglage soit satisfaite.

5. Banc d'essai pour des essais sur des roues de véhicules (3), des pneus (1), des moyeux de roues (4), des paliers de roues (5) ou des vis de roues dans des conditions identiques, comprenant

> a) un étrier de charge orientable en forme de C ou de forme angulaire avec un dispositif de fixation (6) comportant des barres horizontales (8) et des barres verticales (9) pour la fixation rotative d'une roue de véhicule (3) et pour le pivotement de cette dernière sous différents angles de piqué $\Upsilon$,
> b) un tambour (11) avec la surface périphérique intérieure (18) duquel un pneu (1) monté sur la roue du véhicule (3) peut être amené en prise de roulement ;
> c) un dispositif (12, 13, 14) de rotation du tambour (11) ;
> d) un dispositif de charge axiale (10A) pour appliquer une force axiale FA agissant en direction axiale de la roue de véhicule, le dispositif de charge axiale (10A) étant relié de façon articulée sur le dispositif de fixation (6) ;
> e) un dispositif de charge radiale (10R) pour appliquer une force radiale FR agissant en direction radiale de la roue de véhicule, le dispositif de charge radiale (10R) étant relié de façon articulée sur le dispositif de fixation (6) et comportant de préférence un axe de pivotement (17) pour l'étrier de maintien ; et
> f) au moins une bague d'usure (15) disposée sur la surface périphérique intérieure (18) du tambour (11) ;
> **caractérisé par**
> g) un dispositif de réglage de l'angle de piqué qui est activable en cours d'exploitation et
> h) des dispositifs de mesure (24, 25, 26, 27) disposé sur l'étrier de charge (8, 9) pour mesurer la courbe des couples de flexion dans l'étrier de charge pour pouvoir régler par extrapolation de la courbe des couples de charge dans l'étrier de charge les valeurs de réglage pour le dispositif de charge radiale (10R), le dispositif de charge axiale (10A) et le dispositif de réglage de l'angle de piqué (20) selon le critère que la résultante de force de consigne connue grâce à un essai du véhicule composée de la force de contact de la roue et de la force latérale de la roue concorde sensiblement ou soit identique au niveau du montant, de la direction et de la position de sa ligne d'action W avec la résultante de force réelle qui s'établit sur le banc d'essai.

6. Banc d'essai selon la revendication 5, **caractérisé en ce que** deux dispositif de mesures (24, 25) placés à distance mutuelle sont disposés sur la barre horizontale (8) et deux dispositifs de mesure (26, 27) placés à distances mutuelles sont disposés sur la barre verticale (9), les positions des dispositifs de mesure (24, 25) sur la barre horizontale (8) étant choisies de façon à ce que les points de mesure se situent entre l'axe de pivotement (17) de l'étrier de charge et la barre verticale (9).

7. Banc d'essai selon la revendication 5 ou 6, **caractérisé en ce que** les dispositifs de mesure (24, 25, 26, 27) sont des extensomètres à fil d'acier, de préférence pour chaque point de mesure un extensomètre à fil d'acier étant placé sur la face supérieure et un extensomètre à fil d'acier étant placé sur la face inférieure de la barre horizontale (8) et de la barre verticale (9).

8. Banc d'essai selon l'une quelconque des revendications 5 à 7, **caractérisé en ce que** le dispositif de charge axiale (10A) comporte une tête de raccordement (21) qui est raccordée de façon articulée par l'intermédiaire d'une bielle (23) sur une entretoise verticale (22) reliée de façon rigide avec la barre horizontale (8) et **en ce que** le dispositif de réglage de l'angle de piqué (20) s'accroche de façon articulée sur la tête de raccordement (21) et sur l'entretoise verticale (22).

9. Banc d'essai selon l'une quelconque des revendications 5 à 8, **caractérisé en ce que** le dispositif de réglage de l'angle de piqué est un vérin hydraulique (20).

FIG.1

FIG 2